Europäisches Patentamt

European Patent Office

Office européen des brevets

(19)

(11) Numéro de publication: **0 384 871**
**A1**

## (12) DEMANDE DE BREVET EUROPEEN

(21) Numéro de dépôt: **90440019.9**

(22) Date de dépôt: **23.02.90**

(51) Int. Cl.⁵: **B64C 11/36**

(30) Priorité: **23.02.89 FR 8902545**

(43) Date de publication de la demande:
**29.08.90 Bulletin 90/35**

(84) Etats contractants désignés:
**AT BE CH DE DK ES GB GR IT LI LU NL SE**

(71) Demandeur: **VIAUD, Rémi**
**19, rue de Savigneux**
**F-68300 Rosenau(FR)**

(72) Inventeur: **VIAUD, Rémi**
**19, rue de Savigneux**
**F-68300 Rosenau(FR)**

(74) Mandataire: **Arbousse-Bastide, Jean-Claude**
**Philippe**
**CABINET ARBOUSSE BASTIDE 20, rue de**
**Copenhague**
**F-67000 Strasbourg(FR)**

(54) **Système de commande manuelle du pas d'une hélice d'aéronef.**

(57) Système de commande manuelle du pas d'une hélice d'aéronef, dont chaque pale est montée dans une douille (1) montée pivotante dans un boîtier (45) formé de deux demi-moyeux (4, 5).

A son extrémité intérieure la douille (1) porte un pignon (6) engrenant avec une crémaillère (9) coulissant dans une lumière (10) du boîtier (45), et fixée à un plateau (11) solidarisé à l'extrémité d'une tige (12) qui traverse axialement et successivement le boîtier (45), un arbre creux (13) solidarisé audit boîtier (45) et une cage de roulement (21) munie d'un filetage intérieur coopérant avec un filetage ménagé sur ladite tige (12), la cage de roulement (21) comportant en outre un filetage extérieur coopérant avec un filetage ménagé à l'intérieur d'une roue de commande (24) munie d'une denture extérieure avec laquelle coopère un pignon (25) qui reçoit la commande manuelle par l'intermédiaire d'une liaison appropriée, une rainure ménagée dans la cage (21) pour servir de logement à une barrette (23') solidaire d'un plateau (23) fixé à l'arbre creux (13) empêchant la rotation de ladite cage (21), en sorte que la rotation de la roue de commande (24) entraîne le déplacement en translation axiale de la cage de roulement (21), et par là de la tige (12), du plateau (11) et des crémaillères (9), lesquelles, coopérant avec les pignons (6), font pivoter les douilles (1), et donc les pales de l'hélice, dans le sens et de l'angle choisis.

Fig 1

## SYSTEME DE COMMANDE MANUELLE DU PAS D'UNE HELICE D'AERONEF.

La présente invention concerne un système de commande manuelle du pas d'une hélice, adaptable notamment aux aéronefs légers connus sous le nom d'"ULM", mais aussi à tout engin mettant en oeuvre une hélice pour sa propulsion ou sa direction.

Il existe actuellement de nombreux systèmes de commande du pas d'une hélice d'aéronef, destinés à en modifier l'effet en vue d'optimiser le couple du moteur en fonction des conditions de vol. Toutefois ces systèmes sont généralement compliqués, faisant parfois intervenir toute une tringlerie, comme c'est notamment le cas pour les rotors d'hélicoptères, ou un dispositif à engrenages coniques semblable à un différenciel, en sorte qu'ils sont lourds et coûteux, outre le fait qu'ils entraînent une importante consommation d'énergie.

Dans le cas des ULM, en raison de cette consommation d'énergie, on a renoncé à équiper les hélices d'un système variateur de pas, ce qui a pour conséquence que l'on doit se contenter d'un compromis entre les conditions de décollage optimales et les conditions de vol en palier.

La présente invention vise un système permettant de manoeuvrer les hélices manuellement, donc sans consommation d'énergie, ce dispositif présentant la particularité avantageuse d'être d'une très grande légèreté en raison de sa simplicité.

A cet effet, dans le système selon l'invention, chaque pale de l'hélice étant solidaire à sa base d'un arbre monté pivotant dans un boîtier solidaire en rotation de la poulie d'entraînement de l'hélice, l'extrémité de cet arbre porte un pignon engrènant avec une crémaillère montée coulissante dans ledit boîtier, parallèlement à l'axe de rotation de l'hélice, l'ensemble des crémaillères correspondant à l'ensemble des pales de l'hélice étant solidaires d'un plateau porté par l'extrémité d'une tige traversant axialement ledit boîtier et ladite poulie, l'extrémité opposée de la tige comportant un filetage extérieur. L'équipage constitué par la tige, le plateau et les crémaillères est mobile axialement, mais fixe en rotation par rapport au boîtier, et sur l'extrémité filetée de la tige est montée une roue de commande, fixe axialement mais pouvant tourner sous l'action d'une manette de commande actionnée à distance par le pilote, et comportant un filetage intérieur coopérant avec le filetage extérieur de la tige. La rotation de la manette détermine la rotation de la roue et, par coopération entre les filetages, un déplacement axial de l'équipage, et par suite des crémaillères, lesquelles par coopération avec les pignons, provoquent une rotation simultanée des pales dans un sens et d'un angle dépendant de l'angle et du sens de rotation de la manette.

Dans la pratique, la liaison entre la manette de commande et la roue de commande peut se faire par un flexible ou une tringle rotatifs, car la distance entre le pilote et l'hélice est très courte. Pour assurer la finesse du réglage, un engrenage démultiplicateur peut être inséré entre l'extrémité de cet organe de liaison et la roue de commande.

La présente invention sera mieux comprise à la lecture de la description qui suit d'un de ses modes de réalisation illustré par le dessin annexé, étant bien entendu que cette description ne présente aucun caractère limitatif vis-à-vis de l'invention.

Dans le dessin annexé :

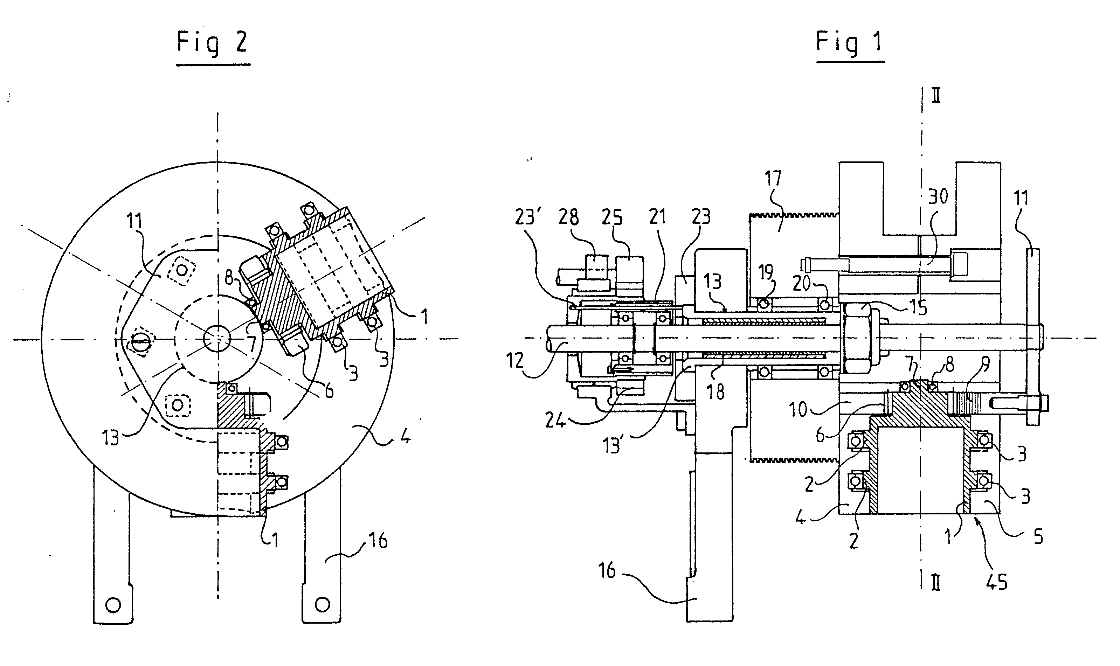

- la figure 1 représente une coupe axiale d'un système selon l'invention associé à l'entraînement d'une hélice tripale.

- la figure 2 est une demi-vue en coupe transversale selon la ligne II-II de la figure 1.

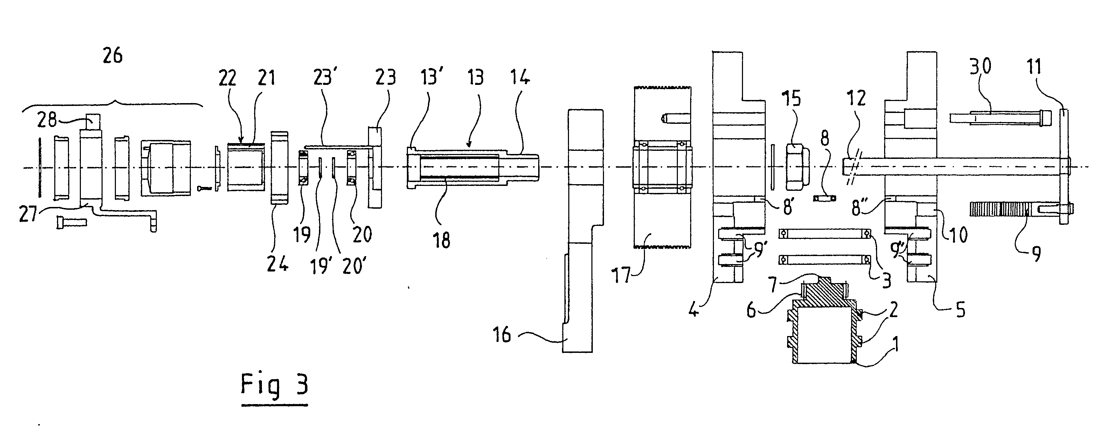

- la figure 3 est une vue éclatée du système de la figure 1.

Si on se réfère à ces figures, on voit que le dispositif selon l'invention comporte trois douilles de pale 1 recevant chacune la queue d'une pale ; la douille 1 comporte des épaulements 2 destinés à porter des roulements à bille 3 permettant le pivotement de la douille, et par suite de la pale, dans un boîtier 45 formé de deux demi-moyeux 4 et 5. A son extrémité intérieure la douille 1 porte un pignon 6 et se termine par un axe d'appui de pivotement 7, portant lui-même un roulement 8 venant se placer dans un logement $8'$-$8''$ du boîtier 45, de la même manière que les roulements 3 viennent se placer dans des logements $9'$-$9''$ du même boîtier.

Le pignon 6 engrène en permanence avec une crémaillère 9 coulissant dans une lumière 10 du boîtier 45, et fixée à un plateau 11, de même que les crémaillères correspondant aux deux autres pales, le plateau 11 étant solidarisé à l'extrémité d'une tige 12 qui traverse axialement le dispositif.

La tige 12 traverse ainsi, après le boîtier 45, un arbre creux 13 fixé au moyeu 4 du boîtier 45 par un écrou de serrage 15 vissé sur un filetage 14 ménagé à l'extrémité de l'arbre creux 13, qui traverse la patte de fixation 16 du système sur l'engin, et la poulie 17 d'entraînement par courroie depuis le moteur. L'intérieur de l'arbre creux 13 comporte un roulement 18 à deux axes (rotation et translation). Un rebord avant $13'$ de l'arbre 13 vient s'accoupler à un plateau 23 portant une barrette de guidage $23'$ venant s'enclencher dans une cage de roulement 21, dans laquelle sont logés des roulements 19 et 20, maintenus par des circlips $19'$-$20'$, et comportant une rainure pour loger la barrette $23'$

de manière à maintenir la cage 21 en lui interdisant toute rotation. Une roue 24, portant une denture à l'extérieur, et un filetage à l'intérieur, coopère par ce dernier avec un filetage 22 ménagé à l'extérieur de la cage 21, laquelle comporte en outre un filetage intérieur coopérant avec un filetage ménagé sur la tige 12.

L'ensemble 26 des pièces de guidage et de fixation comporte un collier 27 dont une patte 28 présente un pallier pour l'axe d'un pignon 25, qui vient coopérer avec la denture extérieure de la roue 24 et qui reçoit la commande du pilote par l'intermédiaire d'une liaison (non représentée).

Le fonctionnement du système est le suivant :

Quand le pilote décide de modifier le pas de l'hélice, par exemple, quand après avoir décollé avec le moteur à sa vitesse maximale et le pas minimal, il décide de réduire le moteur, et a donc besoin d'augmenter le pas de l'hélice, il actionne la manette de commande, en la tournant dans le sens et de l'angle appropriés.

La liaison transmet cette rotation au pignon 25, qui la transmet, par démultiplication, à la roue 24 dont le filetage intérieur coopère avec le filetage extérieur 22 de la cage 21. La roue 24 étant fixe axialement et la cage 21 étant fixe en rotation, cette dernière se déplace alors axialement, en entraînant dans ce déplacement axial l'ensemble de l'équipage tige 12-plateau 11-crémaillères 9. Ces dernières coopérant avec les pignons 6 correspondants font pivoter les douilles 1, et donc les pales dans le sens et de l'angle choisis.

La commande et ses effets n'entraînent aucune consommation d'énergie. Un calcul simple permet de montrer que pour une variation totale de pas de -20° à +20° (c'est-à-dire en inversant la poussée jusqu'aux deux limites maximales), la course totale de la crémaillère est de 13,96 mm si le pignon 6 a un diamètre de 40 mm. Cette course très courte explique la nécessité d'une démultiplication de la commande pour assurer une finesse suffisante de son effet.

Il est clair que la faculté de commander ainsi, sans dépense d'énergie, le pas des hélices des aéronefs légers permet d'utiliser au mieux la puissance des moteurs, et par suite de mettre en oeuvre des moteurs moins puissants, plus légers et moins coûteux.

Au surplus, ce système est de fabrication simple et n'exige ni matériaux ni outillage spécialisés. Il peut en outre être facilement adapté à des engins déjà existants, ou être adapté à des pompes ou tout autre dispositif mettant en oeuvre une hélice dont il peut être avantageux de pouvoir modifier le pas.

Il va enfin de soi que la présente invention ne saurait être limitée à la description qui précède d'un de ses modes de réalisation, susceptible de subir un certain nombre de modifications sans pour autant sortir du cadre de l'invention. En particulier, la commande manuelle parvenant au système par l'intermédiaire de toute liaison appropriée (par exemple tringle ou flexible) peut être assistée par une motorisation électrique, pour un plus grand confort de manoeuvre.

## Revendications

1) Système de commande manuelle du pas d'une hélice, notamment d'aéronef, dont chaque pale est montée dans une douille montée pivotante dans un boîtier (45) formé de deux demi-moyeux (4, 5), caractérisé en ce que, à son extrémité intérieure la douille (1) porte un pignon (6) engrenant avec une crémaillère (9) coulissant dans une lumière (10) du boîtier (45), et fixée à un plateau (11) solidarisé à l'extrémité d'une tige (12) qui traverse axialement et successivement, le boîtier (45), un arbre creux (13) solidarisé audit boîtier (45) et une cage de roulement (21) munie d'un filetage intérieur coopérant avec un filetage ménagé sur ladite tige (12), la cage de roulement (21) comportant en outre un filetage extérieur (22) coopérant avec un filetage ménagé à l'intérieur d'une roue de commande (24) munie d'une denture extérieure avec laquelle coopère un pignon (25) qui reçoit la commande manuelle par l'intermédiaire d'une liaison appropriée, une rainure ménagée dans la cage (21) pour servir de logement à une barrette (23') solidaire d'un plateau (23) fixé à l'arbre creux (13) empêchant la rotation de ladite cage (21), en sorte que la rotation de la roue de commande (24) entraîne le déplacement en translation axiale de la cage de roulement (21), et par là de la tige (12), du plateau (11) et des crémaillères (9), lesquelles, coopérant avec les pignons (6), font pivoter les douilles (1), et donc les pales de l'hélice, dans le sens et de l'angle choisis.

2) Système selon la revendication 1, caractérisé en ce que la commande manuelle est transmise au pignon (25) par une liaison du type flexible ou tringle.

3) Système selon la revendication 1 ou la revendication 2, caractérisé en ce qu'un engrenage démultiplicateur est interposé entre ladite liaison et la roue de commande (24).

Fig 2

Fig 1

EP 0 384 871 A1

Fig 3

EP 0 384 871 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 177 949 (CASTON)<br>* Colonne 1, lignes 39-45,59-71;<br>colonne 2, lignes 1-21,47-55; figures<br>1-4 *<br>--- | 1 | B 64 C 11/36 |
| A | US-A-2 172 932 (CAIRNS)<br>* Page 1, colonne de droite, ligne 19 –<br>page 2, colonne de gauche, ligne 35;<br>figures 1,2 *<br>--- | 1 | |
| A | US-A-2 473 697 (ANNESLEY)<br>* Colonne 3, lignes 43-50; figures 1,2<br>*<br>--- | 2 | |
| A | US-A-2 354 422 (ROBY)<br>* Figures 1,3 *<br>----- | 2,3 | |

**DOMAINES TECHNIQUES RECHERCHES (Int. Cl.5)**

B 64 C

**Le présent rapport a été établi pour toutes les revendications**

| Lieu de la recherche | Date d'achèvement de la recherche | Examinateur |
|---|---|---|
| LA HAYE | 23-05-1990 | ZERI A. |